# EUROPÄISCHE PATENTANMELDUNG

(11) **EP 0 571 728 A2**
(43) Veröffentlichungstag der Anmeldung: **01.12.1993**
(21) Anmeldenummer: 93104269.1
(22) Anmeldetag: 16.03.1993
(51) Int. Cl.: G01N 21/88, B31B 19/74

(54) **Verfahren zur Prüfung der Ausbildung kontinuierlich geförderter Werkstücke**

(30) Priorität: 27.05.1992 DE 4217623
(71) Anmelder: Windmöller & Hölscher, D-49525 Lengerich (DE)
(72) Erfinder: Maneke, Siegfried, Ing., W-4540 Lengerich (DE); Marek, Rainer, Dipl.-Ing., W-4446 Hörstel-Riesenbeck (DE); Sandkämper, Horst, W-4506 Hagen a.T.W. (DE)
(74) Vertreter: Gossel, Hans K., Dipl.-Ing.

(57) **Zusammenfassung**

Zur Prüfung der Ausbildung kontinuierlich geförderter Werkstücke, vorzugsweise der Ausbildung von Faltungen und/oder der Ausbildungen von Böden von Papiersäcken und/oder Aufdrucken o.dgl. wird der zu prüfende Bereich von einer CCD-Halbleiter-Kamera aufgenommen, und das Bild wird visuell geprüft oder durch einen Rechner mit einer Vorlage, die der Soll-Ausbildung des Werkstücks entspricht, verglichen. Um die Prüfung der Böden auf einer kurzen Förderstrecke vornehmen zu können, werden aufeinanderfolgend mindestens zwei Teilbilder des zu prüfenden Bereichs des Werkstücks aufgenommen, die sich zu dem gesamten zu prüfenden Bereich zusammensetzen lassen.

## Beschreibung

Die Erfindung betrifft ein Verfahren zur Prüfung der Ausbildung kontinuierlich geförderter Werkstükke, vorzugsweise der Ausbildung der Faltungen und/oder der Ausbildung der Böden und/oder des Aufdrucks von Papiersäcken, bei dem der zu prüfende Bereich von einer CCD-Halbleiter-Kamera aufgenommen und das aufgenommene Bild visuell geprüft oder mit einer Vorlage, die der Soll-Ausbildung des Werkstücks entspricht, verglichen wird. Prüfverfahren dieser Art sind bekannt, wobei die Belichtung mit einem Stroboskop erfolgt. Das Auflösungsvermögen der CCD-Halbleiter-Kamera hängt von der Anzahl der in Matrix-Form angeordneten lichtempfindlichen Elemente ab. Das von der Kamera aufgenommene Bild kann in einem Rechner mit einer Soll-Vorlage verglichen werden, wobei bestimmte Merkmale geprüft und Toleranzen vorgesehen werden können, bei deren Überschreiten erst eine Fehlermeldung erfolgt.

Werden größere Werkstücke geprüft, nehmen die CCD-Halbleiter-Kameras und die zugehörigen Belichtungseinrichtungen einen verhältnismäßig großen Raum ein, der dann zu einer entsprechenden Vergrößerung oder Verlängerung der Maschine führt, in der das zu prüfende Werkstück bearbeitet und von einer Bearbeitungsstation zu einer anderen gefördert wird.

Bei einer bekannten Vorrichtung zur Prüfung der Bodenausbildung von Papiersäcken mit CCD-Halbleiter-Kameras werden zum Zwecke der Prüfung die Böden relativ zu dem flachliegenden Mittelteil senkrecht gestellt, so daß die beidseits angeordneten CCD-Halbleiter-Kameras Bilder der gesamten Böden aufnehmen, die dann in einem Rechner geprüft werden. Diese bekannte Prüfeinrichtung führt zu einer Verlängerung der Herstellungsmaschine mindestens um eine Strecke, die einer Sackbreite entspricht. Um eine derartige Prüfvorrichtung in vorhandenen Herstellungsanlagen unterbringen zu können, ohne diese verlängern zu müssen, ist es dann erforderlich, die zum Zwecke der Prüfung senkrecht gestellten Böden durch Leitvorrichtungen auf einer sehr kurzen Förderstrecke wieder flachzulegen, was zu einer starken Verformung der Böden führt, die ein Ablösen der frisch aufgeklebten Bodendeckblätter zur Folge haben kann.

Aufgabe der Erfindung ist es daher, ein Verfahren der eingangs angegebenen Art zu schaffen, das die Prüfung der Böden auf einer kürzeren Förderstrecke gestattet, so daß mit entsprechenden Prüfeinrichtungen ausgestattete Herstellungsmaschinen nicht oder nur unwesentlich verlängert werden müssen.

Erfindungsgemäß wird diese Aufgabe bei einem Verfahren der gattungsgemäßen Art dadurch gelöst, daß aufeinanderfolgend mindestens zwei Teilbilder des zu prüfenden Bereichs des Werkstücks aufgenommen werden, die sich zu dem gesamten zu prüfenden Bereich zusammensetzen lassen. Nach dem erfindungsgemäßen Vorschlag wird also der zu prüfende Bereich des kontinuierlich geförderten Werkstücks aufeinanderfolgend zweimal mit der Kamera aufgenommen, wobei mit der ersten Aufnahme ein Bild des vorauslaufenden Bereiches und mit der zweiten Aufnahme ein Bild des nachlaufenden Bereiches des zu prüfenden Gesamtbereiches des Werkstücks aufgenommen wird. Die aufgenommenen Bereiche können auf einem Monitor visuell geprüft werden. Vorzugsweise erfolgt jedoch eine Prüfung der aufgenommenen Bereiche in einem Rechner, in dem das Bild der Soll-Ausbildung der zu prüfenden Bereiche gespeichert ist. Der Rechner prüft die aufgenommenen Halbbilder und vergleicht diese mit den gespeicherten Soll-Bildern, wobei übliche Toleranzgrenzen eingeführt werden können, aus denen die aufgenommenen Bilder nicht herausfallen dürfen.

Bei der Prüfung der Ausbildung von Böden von Säcken ist es beispielsweise möglich, in den Rechner das Bild eines ordnungsgemäß ausgebildeten Bodens einzugeben und zusätzlich Toleranzgrenzen vorzugeben.

Die Belichtung der Kamera bei der Aufnahme der aufeinanderfolgenden Bilder erfolgt zweckmäßigerweise durch ein Stroboskop mit der vorgegebenen Belichtungszeit. Das Stroboskop wird dabei so gesteuert, daß mit dem ersten Blitz das erste, vorauslaufende Halbbild und mit dem zweiten Blitz das nachlaufende Halbbild aufgenommen wird.

Die Belichtung der lichtempfindlichen Halbleiterschicht der Kamera kann auch durch eine Verschlußsteuerung erfolgen. Ist eine Verschlußsteuerung vorgesehen, wird der zu prüfende Werkstückbereich ständig mit einer Lichtquelle angestrahlt.

Zur Steuerung der Belichtung kann erste Belichtung durch ein Signal einer die Vorderkante des Werkstücks erfassenden Fotozelle ausgelöst werden.

Entsprechend kann zweite Belichtung durch ein Signal einer die Hinterkante des Werkzeugs erfassenden Fotozelle ausgelöst werden.

Die zweite Belichtung kann auch durch ein Zeitglied oder den Impuls eines Wegmessers gesteuert werden, die durch das Signal des die erste Belichtung auslösenden Sensors gestartet werden.

Ist es erforderlich, größere oder längere Gesamtprüfbereiche zu prüfen, können beliebig viele den Gesamtbereich unterteilende Teilbilder aufgenommen werden, die dann der Auswertung zugeführt werden.

Das erfindungsgemäße Verfahren gestattet es somit, in einem sehr kleinen Prüfbereich die ordnungsgemäße Werkstückausbildung mit einer CCD-Halbleiter-Kamera zu überprüfen.

Nach dem erfindungsgemäßen Verfahren lassen sich selbstverständlich auch andere Merkmale als Kantenausbildungen prüfen, beispielsweise Aufdrucke oder das lagerichtige Aufbringen oder Aufkleben von Blättern o.dgl.

Ein Ausführungsbeispiel der Erfindung wird nachstehend anhand der Zeichnung näher erläutert. In dieser zeigt
Fig. 1 eine schematische Darstellung der Prüfung der ordnungsgemäßen Ausbildung der Böden eines in einer Fertigungsanlage kontinuierlich geförderten Sackes, und zwar die Prüfung der Bödenausbildung durch Aufnahme des vorauslaufenden Bereiches, und
Fig. 2 eine der Fig. 1 entsprechende Darstellung, in der der nachlaufende Bereich des Bodens zum Zwecke der Prüfung aufgenommen wird.

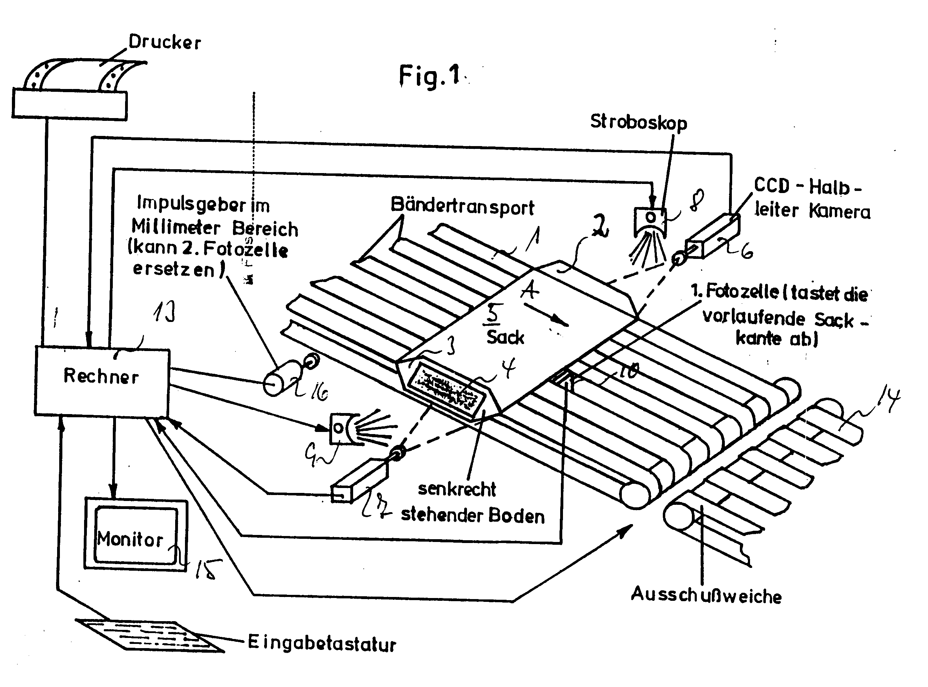

Aus Fig. 1 ist ein aus mehreren im Abstand nebeneinander angeordneten endlosen Bändern bestehener Bändertransport 1 ersichtlich, der Teil eines Bodenlegers bzw. einer Sackherstellungsmaschine ist. In Fig. 1 ist ein Teil des Bodenlegers bzw. der Sackherstellungsmaschine dargestellt, in der an das aus einem flachliegenden Schlauchstück aus Papier bereits die Böden 2,3 angeformt sind. Auf die zugelegten Böden sind übliche Bodendeckblätter 4 aufgeklebt. Der Sack 5 wird auf dem Bändertransport, von dem der besseren Übersichtlichkeit halber nur die Unterbänder dargestellt sind, in Richtung des Pfeils A gefördert.

Zum Zwecke der Prüfung der richtigen Bodenausbildung-sind-die Böden 2,3 zu dem flachliegenden Mittelteil des Sackes 5 senkrecht gestellt.

Beidseits des Bändertransports sind in dem Maschinengestell CCD-Halbleiter-Kameras 6,7 gehaltert. Die Optik dieser Kameras ist ständig geöffnet, wobei die Belichtung durch die zu prüfenden Bodenbereiche anstrahlende Stroboskope 8,9 erfolgt. Die Belichtungsdauer entspricht dabei der Blitzdauer des Stroboskops.

Der erste Blitz der beiden Stroboskope 7,8 wird durch das Signal einer zwischen den Bändern angeordneten Fotozelle 10 ausgelöst, die die vorauslaufende Kante des quergeförderten Sackes 5 erfaßt.

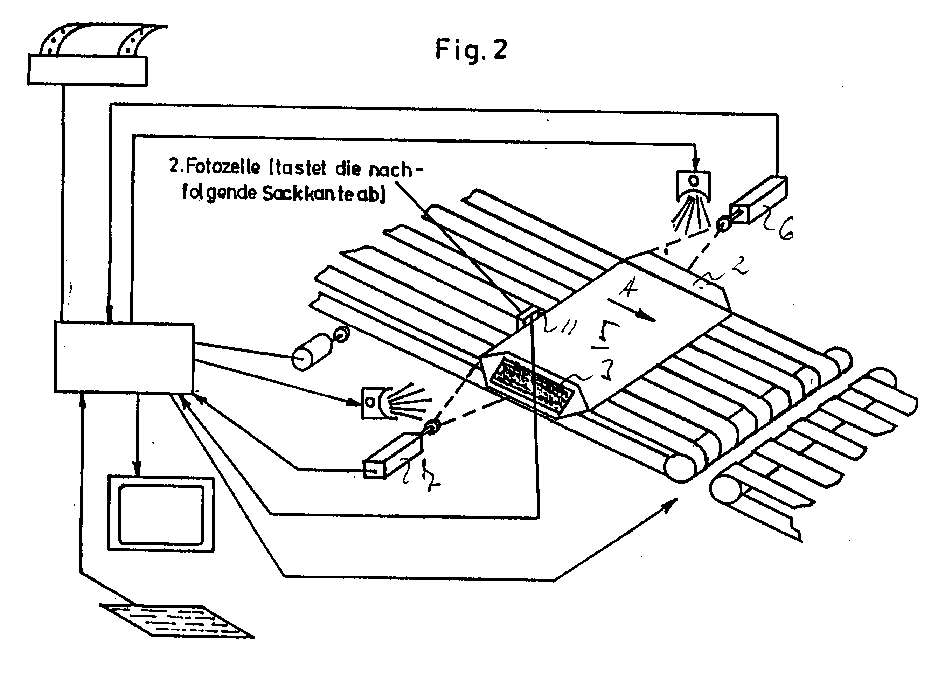

Ein zweiter Blitz wird ausgelöst, wenn die aus Fig. 2 ersichtliche zweite Fotozelle 11 den Durchlauf der hinteren Kante des Sackes erfaßt. Durch die beiden Blitze nehmen die Kameras 6,7 jeweils etwa ein Halbbild jedes der beiden Böden 2,3 auf, und zwar mit dem ersten Blitz den vorauslaufenden Bodenbereich und mit dem zweiten Blitz den nachlaufenden Bodenbereich. Um den Gesamtbereich des zu prüfenden Bodens zu erfassen, können die beiden nachfolgend aufgenommenen Bilder einander selbstverständlich auch geringfügig überlappen.

Die von den Kameras 6,7 aufgenommenen Bilder werden in der dargestellten Weise einem Rechner 13 zugeführt, der die jeweils vier je Sack aufgenommenen Halbbilder der Böden mit den Sollvorlagen vergleicht und bei Feststellung eines Fehlers ein Alarmsignal auslöst oder aber die Ausschußweiche 14 betätigt, durch die dann der als fehlerhaft erkannte Sack ausgeschieden wird.

Zusätzlich können die aufgenommenen Prüfbilder auf einem Monitor 15 dargestellt werden.

Der zweite Blitz der beiden Stroboskope kann statt durch eine zweite Fotozelle auch durch den Impuls eines Wegmessers 16 ausgelöst werden. Dieser Wegmesser wird mit der Geschwindigkeit der Bänder des Bändertransports 1 angetrieben und erzeugt Impulse, die beispielsweise jeweils einer Förderstrecke im Millimeterbereich entsprechen. Der Wegmesser 16 wird durch die erste Fotozelle gestartet. Sodann werden die Impulse gezählt, die der Strecke entsprechen, nach derem Durchlauf die Stroboskope die zweiten Blitze zur Aufnahme des nachlaufenden Bereichs abgeben.

Mit dem erfindungsgemäßen Verfahren ist somit ein Bildverarbeitungssystem geschaffen worden, das es gestattet, fertige Papier- und Plastiksäcke, Papier- und Plastiktragetaschen mit unterschiedlichen Geometrien und Aufdrucken sowie auch Werkstücke anderer Art auf ihre ordnungsgemäße Ausbildung zu prüfen.

Die Prüfung der Böden oder der zu prüfenden Werkstücke erfolgt in der beschriebenen Weise in zwei aufeinanderfolgenden Schritten. Zuerst wird die vorauslaufende Seite des Bodens und dann die nachlaufende Seite des Bodens erfaßt und beide Bilder dann gemeinsam geprüft. Das erfindungsgemäße Verfahren gestattet es somit, die Bildaufnahmefläche extrem klein zu halten, so daß eine Maschine, die mit der erfindungsgemäßen Prüfeinrichtung versehen ist, ihre ursprüngliche Länge beibehalten kann und nicht in aufwendiger Weise verlängert werden muß.

Wie beschrieben, können die auslösenden Impulse zur Bildaufnahme von zwei Lichtschranken oder aber nur von eine Lichtschranke und einem Impulsgeber gesteuert werden, der in Abhängigkeit der durchlaufenden Sackbreite eingestellt werden kann und Signale abgibt.

## Patentansprüche

1. Verfahren zur Prüfung der Ausbildung kontinuierlich geförderter Werkstücke, vorzugsweise der Ausbildung der Faltungen und/oder der Ausbildung der Böden von Papiersäcken und/oder von Aufdrucken o.dgl., bei dem der prüfende Bereich von einer CCD-Halbleiter-Kamera aufgenommen und das Bild visuell geprüft oder durch einen Rechner mit einer Vorlage, die der Soll-Ausbildung des Werkstücks entspricht, verglichen wird,
dadurch gekennzeichnet,
daß aufeinanderfolgend mindestens zwei TeilBilder des zu prüfenden Bereichs des Werkstücks aufgenommen werden, die sich zu dem gesamten zu prüfenden Bereich zusammensetzen lassen.

2. Verfahren nach Anspruch 1, dadurch gekennzeichnet, daß die Belichtung durch ein Stroboskop erfolgt.

3. Verfahren nach Anspruch 1, dadurch gekennzeichnet, daß der zu prüfende Bereich ständig von einer Lichtquelle angestrahlt wird und die Belichtung durch die Verschlußsteuerung der Kamera erfolgt.

4. Verfahren nach einem der Ansprüche 1 bis 3, dadurch gekennzeichnet, daß die erste Belichtung durch ein Signal einer die Vorderkante des Werkstücks erfassende Fotozelle ausgelöst wird.

5. Verfahren nach einem der Ansprüche 1 bis 4, dadurch gekennzeichnet, daß die zweite Belichtung durch ein Signal einer die nachlaufenden Kante des Werkstücks erfassenden Fotozelle ausgelöst wird.

6. Verfahren nach einem der Ansprüche 1 bis 4, dadurch gekennzeichnet, daß die zweite Belichtung durch ein Signal eines Zeitgliedes oder einen Impuls eines Wegmessers gesteuert wird, die mit dem die erste Belichtung auslösenden Signal gestartet werden.
